# EUROPEAN PATENT APPLICATION

(11) **EP 1 646 182 A1**
(43) Date of publication of application: **12.04.2006**
(21) Application number: 05300795.1
(22) Date of filing: 05.10.2005
(51) Int. Cl.: H04L 12/18

(54) **Electronic content distribution management methods and systems**

(30) Priority: 06.10.2004 US 959702
(71) Applicant: Alcatel, 75008 Paris (FR)
(72) Inventor: GYETKO, Gregory Erich, K0A 1T0, Dunrobin (CA)
(74) Representative: Hervouet, Sylvie

(57) **Abstract**

Methods and systems for managing electronic content distribution are provided. Transmission of electronic content on a communication link responsive to a request received from a communication device may be precluded by the transmission of other electronic content, due to bandwidth limitations on the communication link, for example. An electronic content query is transmitted to the communication device if termination of transmission of the other electronic content on the communication link is detected, and transmission of electronic content specified in a response to the electronic content query is then initiated. Connections within a communication system may be managed in a similar fashion, with an electronic content query being transmitted to a communication device which has requested a connection when termination of an existing connection for the communication device is detected. In some embodiments, transmission of the electronic content query is controlled on the basis of a flag stored in a data structure.

## Description

### Field of the Invention

This invention relates generally to communications and, in particular, to managing the distribution of electronic content in communication systems.

### Background

With the evolution of communication systems having enhanced bandwidth capabilities, applications which require relatively large amounts of bandwidth become more feasible. Bandwidth-intensive applications include, for example, digital media services which can provide video information such as television programs or movies, audio programs, and information streams.

In multicast communication systems, multiple subscribers may be coupled to a single communication link that is coupled to a router. Through this communication link, electronic content in the form of program data streams or channels is distributed to end user communication devices. The Internet Group Management Protocol (IGMP) has been developed by the Internet Engineering Task Force (IETF) as a standard for communications between a router and subscribers, which are also often referred to as hosts. Communications between a router and hosts coupled to a particular communication link are accomplished using point-to-multipoint multicast transmissions. IETF specifications RFC-1112 "Host Extensions for IP Multicasting" and RFC-2236 "Internet Group Management Protocol, Version 2", for example, describe one version of IGMP in detail.

Each of the hosts coupled to a router determines which electronic content, associated with multicast groups or channels, it actively receives. A host is generally considered to be actively receiving electronic content when it is receiving particular electronic content which it has been configured or set to receive and use. Although other electronic content might be transmitted to and received by a host, it is possible that the host is not actively receiving all of the electronic content which it receives. For example, a television signal receiver which is set to channel 1 might also receive channel 2, but is actively receiving only channel 1.

When a communication link from the router is shared by multiple hosts, bandwidth limitations on the communication link can require intelligent management of multicast connections provided via the communication link for transmission of electronic content. If a number of users communicate on a single communication link and bandwidth constraints allow a limited number of multicast connections to be supported over the communication link for instance, the actual usage of multicast connections on the link should be monitored. Monitoring of multicast connections in this manner can ensure that bandwidth is not wasted on multicast connections carrying electronic content which no hosts are actively receiving or using.

According to IGMP, a host changes the particular electronic content being received by first sending a Group Leave request to the router to terminate transmission of electronic content associated with a current multicast group and then sending a Group Join request to initiate transmission of new electronic content associated with another multicast group. Termination and initiation of electronic content transmission is also commonly referred to termination and establishment, respectively, of multicast group connections.

In bandwidth-limited environments, it is possible that a new multicast connection would require the termination of an existing connection. Thus, if a Group Leave request sent by a host is not received by a router, a subsequent Group Join request sent by the host might not be successful. In this situation, a host may continue to receive electronic content for a current multicast group, despite the fact that a Group Join request for a new multicast group has been sent to the router. Even if a user attempts several channel changes on a set top video receiver for instance, a channel change might not actually occur until a Group Leave request for the original multicast group is properly received and processed by the router. Lost Group Join requests may cause similar problems, with the possible exception that a host receives no content if a Group Leave request is received but a subsequent Group Join message is lost.

Several techniques have been proposed to address the issue of lost Group Leave or Group Join requests. In conventional IGMP, for example, a General Membership Query (GMQ) is sent to all hosts by a router at a predetermined interval, typically 125 seconds. Each host responds to a GMQ with a membership report indicating for which multicast group(s) the host is to receive electronic content. Where sufficient bandwidth is available, transmission of electronic content to a host in accordance with a membership report may be initiated, thereby restoring service to a host from which a Group Leave and/or Group Join request had been lost. However, conventional IGMP does not support the termination of a current multicast connection by a router in the event of a discrepancy between a membership report and group membership records and therefore does not provide a solution to the above service problem associated with a lost Group Leave request when available resources cannot support a new multicast connection.

United States Patent Application Serial No. 10/310,910, published on June 10, 2004 as US 2004/0111470, entitled "FAST SERVICE RESTORATION FOR LOST IGMP LEAVE REQUESTS", discloses a technique whereby a lost Group Leave request is inferred by comparing Group Join messages received from a host. When it is determined that a Group Leave request from a host was lost, a Group Specific Query (GSQ) for the multicast group to which the lost Group Leave request related is transmitted on a communication link on which the host operates. Each host which is operating on the communication link and actively receiving electronic content for the multicast group responds to the GSQ. In the absence of any responses to a GSQ, a multicast connection on the communication link associated with the multicast group is terminated. Although termination of the multicast connection may free sufficient resources to establish a new multicast connection, transmission of desired electronic content is not initiated unless either a new Group Join request or a membership report in response to a GMQ is received.

These connection management techniques may entail unacceptable delays in initiating transmission of electronic content to hosts in limited-resource multicast systems. Where lost request issues are not resolved until a membership report is received in response to a GMQ, for example, the 125 second delay may be unacceptable. One further approach intended to reduce delays is the reduction of the time interval between GMQs. Considering that a GMQ involves transmitting messages to and from every host and processing membership reports from every host at a router, this approach would significantly increase both communication traffic in a communication system and processing load at a router.

Although the foregoing description relates primarily to multicast communications, similar problems may also arise in other types of communication systems.

### Summary of the Invention

There remains a general need for more robust and efficient methods and systems for management of electronic content distribution and communication system connections over which electronic content is transmitted.

In multicast systems, for instance, it may be desirable to offer connection management techniques which quickly and automatically resolve resource limitations to provide an end user with a newly selected channel or electronic content. These techniques thereby reduce the effects of lost Group Leave requests on an end user when making a selection of a new channel or electronic content.

According to one broad aspect of the invention, there is provided a method of managing electronic content distribution in a communication system. The method includes receiving from a communication device configured for communication on a communication link in the communication system a request for transmission of electronic content to the communication device on the communication link, and determining whether further electronic content being transmitted on the communication link precludes transmission of the electronic content to the communication device on the communication link. If termination of transmission of the further electronic content on the communication link is detected, an electronic content query is transmitted to the communication device. Transmission of electronic content specified in a response to the electronic content query is initiated after the response is received from the communication device.

In one embodiment, the communication link is a digital subscriber line (DSL), and the request, the electronic content query, and the response comprise Internet Group Management Protocol (IGMP) messages.

The operation of determining may involve determining whether transmission of the electronic content on the communication link would exceed available communication resources, such as bandwidth, on the communication link.

Transmission of the electronic content query may be controlled on the basis of a flag which is set when the further electronic content being transmitted on the communication link precludes transmission of the electronic content to the communication device on the communication link. The flag is set responsive to the determination, and checked when termination of transmission of the further electronic content is detected.

In some embodiments, a determination is made as to whether transmission of the further electronic content on the communication link can be terminated, and if so, transmission of the further electronic content on the communication link is terminated. For example, the transmission of the further electronic content can be terminated if the communication device from which the request was received previously requested transmission of the further electronic content and no communication devices configured for operation on the communication link wish to receive the further electronic content. One mechanism for determining whether any communication devices wish to receive the further electronic content involves transmitting a specific query for the further electronic content to all communication devices configured for communication on the communication link. If no responses to the specific query are received, then transmission of the further electronic content on the communication link can be terminated.

A system for managing distribution of electronic content in a communication system is also provided. The system receives from a communication device configured for communication on a communication link in the communication system a request for transmission of electronic content to the communication device on the communication link, determines whether further electronic content being transmitted on the communication link precludes transmission of the electronic content to the communication device on the communication link, detects a termination of transmission of the further electronic content on the communication link where the further electronic content being transmitted on the communication link precludes transmission of the electronic content to the communication device on the communication link, transmits an electronic content query to the communication device responsive to the detecting, and initiates transmission of electronic content specified in a response to the electronic content query received from the communication device. The system may also perform further electronic content distribution management functions.

In some embodiments, the system includes a transceiver and a processor. The transceiver performs the receiving and transmitting functions, and the processor is configured, by software for instance, to perform one or more of the functions of determining, detecting, and initiating. The system may also include a controllable switching element for switching electronic content for transmission on the communication link.

According to another aspect of the invention, a method of managing connections in a communication system is provided, and includes receiving from a communication device a request to establish a connection for transmission of electronic content, identifying an existing connection for transmission of further electronic content to the communication device, detecting termination of the existing connection, transmitting an electronic content query to the communication device responsive to the detecting, and establishing a connection for transmission of electronic content specified in a response to the electronic content query which is received from the communication device.

The method may also involve determining whether bandwidth currently available on a communication link on which the communication device is configured to communicate is sufficient for the connection, and if so, establishing the connection. In this case, the electronic content query is transmitted to the communication device only if the bandwidth currently available is insufficient for the connection. Termination of the existing connection may also be initiated if the bandwidth currently available is insufficient for the connection.

A connection management system for a communication system is also provided. The connection management system receives from a communication device a request to establish a connection for transmission of electronic content, identifies an existing connection for transmission of further electronic content to the communication device, detects termination of the existing connection, transmits an electronic content query to the communication device responsive to the detecting, and establishes a connection for transmission of electronic content specified in a response to the electronic content query which is received from the communication device.

The connection management system may also perform further functions, and may include a transceiver, a processor, and a controllable switching element, among other components.

Another aspect of the invention provides a machine-readable medium storing a data structure. The data structure includes a record including an identifier of electronic content and an identifier of a communication device to which the electronic content is to be transmitted, and a flag associated with the record indicating whether a query is to be transmitted to the communication device upon termination of transmission of the electronic content to the communication device.

In one embodiment, the electronic content is multicast group electronic content associated with a multicast group, and the identifier of electronic content is an identifier of the multicast group.

If the electronic content is to be transmitted to a plurality of communication devices, then the record may include an identifier of each of a plurality of communication devices. According to a further embodiment, the data structure includes a respective record for each of the plurality of communication devices and a respective flag associated with each of the records.

Other aspects and features of embodiments of the present invention will become apparent to those ordinarily skilled in the art upon review of the following description of specific illustrative embodiments of the invention.

### Brief Description of the Drawings

Examples of embodiments of the invention will now be described in greater detail with reference to the accompanying drawings, in which:
Fig. 1 is a block diagram of a communication system in which embodiments of the invention may be implemented;
Fig. 2 is a flow diagram illustrating a method according to an embodiment of the invention;
Fig. 3 is a signal flow diagram showing signalling between communication devices and a network element in accordance with an embodiment of the invention;
Fig. 4 is a block diagram of a network element in which a system according to an embodiment of the invention may be implemented; and
Fig. 5 is a block diagram of a data structure according to a further embodiment of the invention.

### Detailed Description of Preferred Embodiments

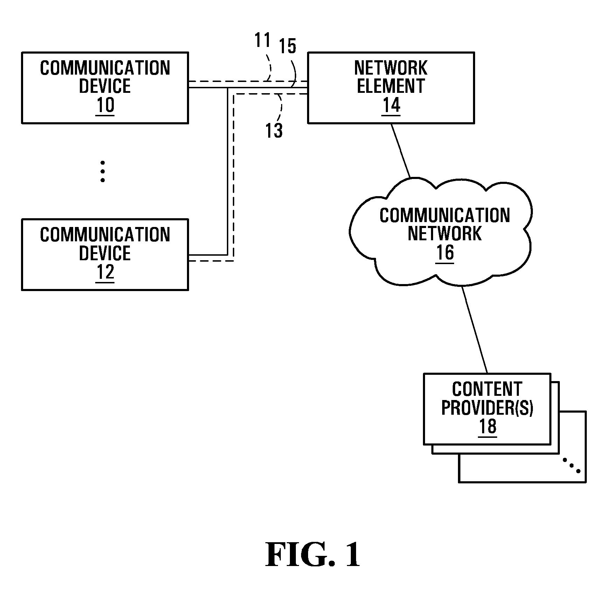

Fig. 1 is a block diagram of a communication system in which embodiments of the invention may be implemented. The communication system in Fig. 1 includes communication devices 10, 12 connected to a network element 14 of a communication network 16 through a shared communication link 15, and one or more content providers 18. Although a communication system may include many communication devices 10, 12, network elements 14, and content providers 18, only representative examples thereof are shown in Fig. 1 to avoid congestion. It should therefore be appreciated that the system of Fig. 1, as well as the contents of the other drawings, are intended solely for illustrative purposes, and that the present invention is in no way limited to the particular example embodiments explicitly shown in the drawings and described herein.

The communication devices 10, 12 are configured for communication with the network element 14 and thus the communication network 16 over the shared communication link 15. In one embodiment, the communication devices 10, 12 are video receivers, also often referred to as set top boxes.

In general, as those skilled in the art will appreciate, the communication devices 10, 12 may include transceivers compatible with the communication link 15, processors which execute communication software and typically operating system software and software applications, memory devices for storing software, configuration parameters, and possibly other information, and user interfaces for receiving inputs from and/or providing outputs to users. In the case of a set top box, user interfaces often include an infrared (IR) or radio frequency (RF) receiver for receiving control signals from a user-operated remote control device and manual control keys mounted on the device, with received video signals being processed and output to an external monitor.

Although represented in Fig. 1 as a connection between the communication devices 10, 12 and the network element 14, the communication link 15 need not necessarily be a physical connection. Communications between the communication devices 10, 12 and the network element 14 may be provided through a wired or wireless communication medium or some combination thereof, and references herein to communication links and connections should be interpreted accordingly. Many different types of communication link 15 will be apparent to those skilled in the art of communications.

It should also be appreciated that the communication link 15 may include intermediate components or systems (not shown), illustratively at customer premises where the communication devices 10, 12 are located, to support interoperability between different types of transceiver and different protocols implemented at the communication devices 10, 12 and the network element 14. Thus, the communication link 15 may include a direct or indirect communication path between the communication devices 10, 12 and the network element 14.

The network element 14, like the communication devices 10, 12, is configured for communication over the communication link 15 and may include a transceiver which is compatible with the communication link 15. In some embodiments, the network element 14 includes the same type of transceiver as the communication devices 10, 12.

For communication with the content provider(s) 18 through the communication network 16, the network element 14 may include a further transceiver. However, it is also contemplated that a single transceiver may be used for communications on the communication link 15 and through the communication network 16, with any format or protocol conversions, if necessary, being performed by a processor and appropriate software in the network element 14.

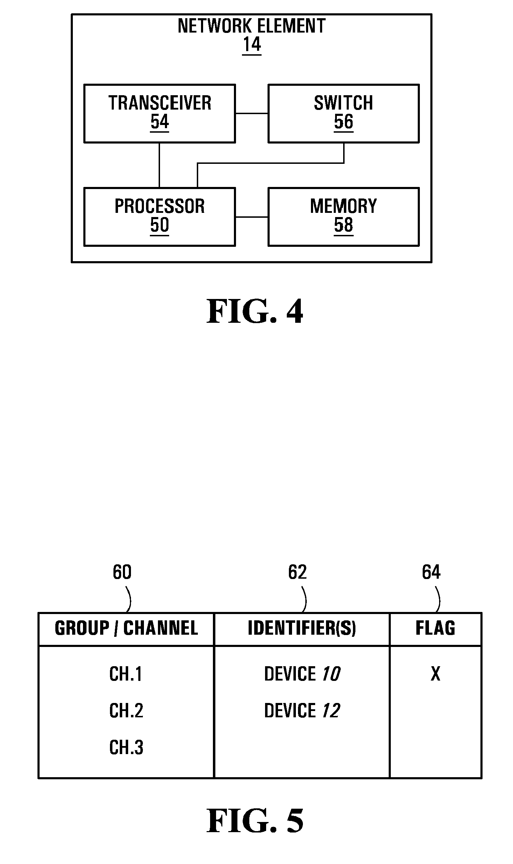

An illustrative example of the network element 14 is described in further detail below with reference to Fig. 4.

Each content provider 18 represents a system operated by a provider of electronic content. Electronic content may include, for example, video content, audio content, and information content such as program guides which contain information on currently available content. A content provider 18 may generate, store, or both generate and store electronic content. Through the network element 14, the one or more content providers 18 provide electronic content to the communication devices 10, 12.

In operation, requests for transmission of particular electronic content, illustratively a specific television channel or multicast content, are transmitted from the communication devices 10, 12 to the network element 14. The electronic content is requested if necessary and received from the content provider(s) 18 by the network element 14 and then transmitted to the communication devices 10, 12. The transmission of electronic content to the communication devices 10, 12 is represented in Fig. 1 as connections 11, 13.

Communication resources available for transmission of electronic content to the communication devices 10, 12 may be limited by such factors as the bandwidth of the communication link 15, the type of equipment installed at the network element 14 or the communication devices 10, 12, and the capacity of virtual circuits or paths through which the communication link 15 is established. In communication systems having limited resources, efficient connection management may be particularly important. For example, if the communication devices 10, 12 are set top boxes in a subscriber's home and the communication link 15 is able to simultaneously carry electronic content for up to two multicast television channels, then the multicast connections 11, 13 must be managed efficiently in order to free resources for re-use in transmission of other television channels, in the event of a channel change at one of the set top boxes for instance. Even in communication systems with less constrained resources, conservation of resources through efficient connection management may be desirable.

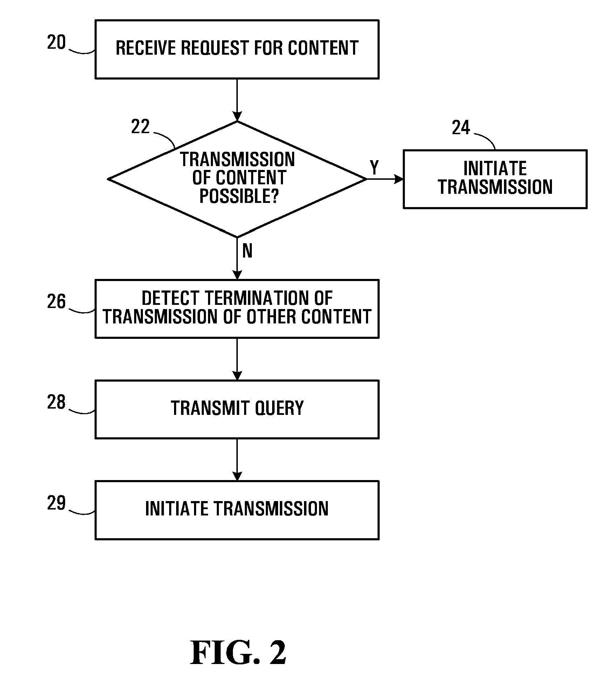

Fig. 2 is a flow diagram illustrating a method of managing electronic content distribution in a communication system according to an embodiment of the invention.

The method begins at 20 with an operation of receiving, from a communication device, a request for transmission of electronic content on a communication link. The request may be an explicit request for transmission of electronic content, such as an IGMP Group Join request. Other types of information may also be interpreted as a request for electronic content. For instance, a membership report for a communication device which is not consistent with membership records maintained at a network element may imply that a previous request was not properly received or processed and be interpreted as a request for electronic content.

A determination is then made at 22 as to whether other electronic content being transmitted on the communication link precludes transmission of the requested electronic content to the communication device. In some embodiments, the determining operation at 22 may involve determining whether transmission of the electronic content on the communication link would exceed communication resources which are currently available on the communication link. The communication resource which might most often limit whether requested electronic content may be transmitted is the bandwidth of the communication link.

In a communication system with plenty of bandwidth, for example, there may be sufficient bandwidth available on the communication link to initiate transmission of the requested electronic content at 24. However, where bandwidth or other communication resources are limited, it might not be possible to transmit the requested electronic content until transmission of some other content has been terminated. With reference to Fig. 1 and the above example of the communication link 15 supporting up to two television channels, if both of the communication devices 10, 12 are currently receiving respective channels and a change to a new channel is made at the communication device 10, then the network element 14 cannot begin transmitting the new channel to the communication device 10 until transmission of another channel has been terminated.

At 26, termination of transmission of other electronic content, illustratively electronic content which is being transmitted but no longer actively received by a communication device, is detected. Responsive to this detection, an electronic content query is transmitted at 28 to the communication device from which the request was received at 20, and possibly other communication devices. The electronic query is intended to elicit a response from the communication device indicating the electronic content that should now be sent to the communication device. In response to an IGMP GMQ, for example, each host responds with a membership report indicating all multicast transmissions which the host is set to actively receive. An IGMP GMQ thus represents one illustrative example of an electronic content query.

Transmission of the electronic content which is specified in a subsequently received response to the electronic content query is initiated at 29. The electronic content which is transmitted at 29 may or may not be the electronic content which was originally requested. In a multicast television system, for example, there may be some delay between making a channel change and receiving a new channel, especially if a Group Leave request is lost. If a user patiently awaits receipt of the new channel, then the response to the electronic content query received at 28 would specify the same electronic content as the original request received at 20. An impatient user, however, may attempt one or more channel changes before the electronic content query is transmitted at 28, and therefore the response may specify different electronic content. Thus, it should be appreciated that the electronic content for which transmission is eventually initiated at 29 may or may not be the electronic content which was originally requested.

It should also be appreciated that the method of Fig. 2 is intended for illustrative purposes. Methods according to embodiments of the invention may include further, fewer, and differently ordered operations than those explicitly shown.

The operation at 28, for example, may be dependent upon other conditions than the termination of transmission of electronic content. According to one embodiment, a flag is set if it is determined at 22 that the transmission of other electronic content on the communication link precludes transmission of requested electronic content. The electronic content query is then transmitted at 28 only if the flag has been set. Embodiments in which a flag is used to trigger transmission of an electronic content query may also include an operation to reset the flag after the electronic content query has been transmitted or transmission of electronic content has been initiated.

Although the method as shown in Fig. 2 relates primarily to initiating transmission of electronic content, possibly after detecting that transmission of other electronic content has been terminated, some embodiments of the invention also initiate or perform operations to terminate transmission of electronic content. In one such embodiment, a further determination is made as to whether transmission of other electronic content on the communication link can be terminated, and if so, the transmission of the other electronic content is terminated. This further determination may involve operations including, for example, comparing an identifier of the communication device, illustratively a MAC address, in the request received at 20 to an identifier in a previous request for which transmission of other electronic content was initiated, to thereby identify whether other electronic content is currently being transmitted to the communication device. When the identifiers from the request and the previous request match, a specific query for the other electronic content may then be sent to all communication devices using the communication link. If no communication devices respond to the query with an indication that the other electronic content is being actively received, then the other electronic content may be terminated.

An IGMP GSQ is one example of a specific query which is suitable for this purpose. In response to a GSQ for a particular multicast group, a communication device either responds, indicating that the communication device is actively receiving electronic content associated with the multicast group, or does not respond. In the absence of a response to a GSQ from a communication device within a predetermined response time period, it is assumed that the communication device is not actively receiving electronic content associated with the multicast group being queried.

Methods according to embodiments of the invention may be implemented, for example, to manage distribution of electronic content by managing communication system connections. When a request to establish a connection for transmission of electronic content is received from a communication device, an existing connection for transmission of other electronic content to the communication device is identified. If termination of the existing connection is detected, an electronic content query is transmitted to the communication device, and possibly also to other communication devices. A connection for transmission of electronic content specified in a response to the electronic content query which is received from the communication device is then established, to thereby initiate transmission of electronic content.

A communication device may specify all electronic content which the communication device is set to actively receive, in the form of multicast group identifiers for instance. A multicast connection for a multicast group or possibly more than one group specified in the response may thus be established. As a response to the query may include an indication of multicast groups for which multicast connections already exist, it may be desirable to first identify and then establish multicast connections only for those multicast groups in the response for which multicast connections do not exist.

When sufficient communication resources are available, a requested connection may be established before the existing connection is terminated. Termination of the existing connection may be initiated if sufficient communication resources are not available to establish the requested connection. Before the existing connection is terminated, however, a specific query may be transmitted. As described above, the existing connection may be terminated in the absence of any responses to the specific query. In one embodiment, two specific queries are transmitted on a communication link before a connection is terminated.

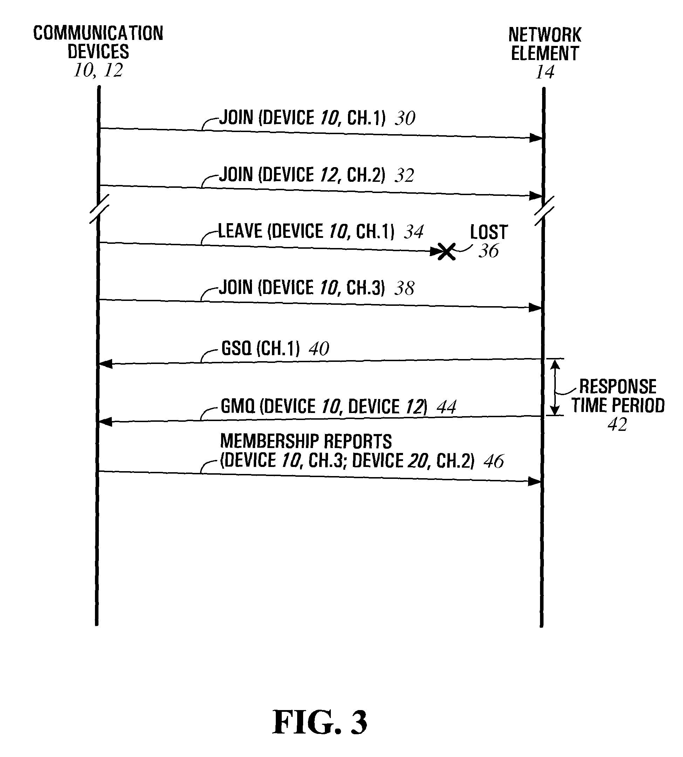

Fig. 3 is a signal flow diagram showing IGMP signalling between the communication devices 10, 12 and the network element 14 of Fig. 1 in accordance with an embodiment of the invention. In order to avoid congestion in the drawing, Fig. 3 includes a single representation of the communication devices 10, 12.

For illustrative purposes, it is assumed that the communication link over which the communication devices 10, 12 and the network element 14 communicate is able to support only up to two multicast connections, illustratively television channels, at any time.

As shown at 30 and 32, respective Group Join requests are sent from the communication devices 10, 12, set top boxes in this example, for specific multicast channels 1 and 2. At a later time, a Group Leave request 34 is sent by the communication device 10, when the end user of communication device 10 no longer wishes to view channel 1 and performs a channel change to channel 3. As shown at 36, the Group Leave request 34 is lost before it reaches the network element 14. The loss of the Group Leave request 34 at 36 may be due to a communication traffic overload control technique which discards packets, for instance. Those skilled in the art will appreciate that there may be other causes for the loss of the Group Leave request 34 at 36.

A further Group Join request 38 is sent by the communication device 10 for the new multicast channel 3 and is received by the network element 14. The network element 14, however, has no record of the lost Group Leave request 34. Since the communication link in this example can support only up to two multicast connections and the multicast connection for channel 1 is still active, the network element 14 cannot grant the Group Join request 38.

In accordance with the teachings of United States Patent Application Publication No. 2004/0111470, referenced above, the network element 14 monitors identifiers of communication devices which request to receive multicasts and detects a matching identifier in the Group Join requests 30, 38. This triggers a Lost Leave recovery procedure in which a GSQ 40 for the multicast group associated with channel 1 is sent by the network element 14. Although only a single GSQ 40 is shown in Fig. 3, the application discloses the transmission of two GSQs, one second apart, for the multicast group of the first Group Join message 30. Any further Group Join messages are preferably ignored until the GSQs are cleared. If the multicast group is no longer needed, which is indicated by the network element 14 not receiving any response to the GSQs within the response time period 42, the multicast connection for the group is terminated. This frees resources on the communication link for any new Group Join requests. The GSQs, which can normally be cleared in approximately 2 seconds, clear the trouble caused by the lost Group Leave request 34.

At the end of the response time period 42, the multicast connection for channel 1 has been cleared. Unless the communication device 10 automatically repeats its desired channel selection, and not all devices will do this, the end user will be left without multicast service until another channel selection is made or a GMQ is performed, which as described above is typically every 125 seconds.

According to an aspect of the invention, a GMQ 44 is triggered responsive to termination of the multicast connection for channel 1 after the response time period 42. In response to the GMQ 44, the communication devices 10, 12 provide updates to the network element 14, in the form of membership reports 46, on the multicast groups for which the communication devices are set to actively receive electronic content. Whereas a GMQ usually sets a response time period of 10 seconds, a GMQ with a lower response time period such as one second could be used in order to get a quicker response.

In the example shown in Fig. 3 and described above, the GMQ 44 is transmitted every time the lost Group Leave request recovery completes. There may be a small disadvantage in this approach. In an Asynchronous Transfer Mode (ATM) over Internet Protocol (IP) system, for example, a GMQ representing two extra packets, encapsulated as one IP packet, is sent downstream to all communication devices on a communication link. The GMQ also causes all communication devices operating on the communication link on which the GMQ was transmitted to respond with membership reports for everything they are set to actively receive. If separate membership reports are sent by a communication device for each multicast, as is often the case, this means that one IP packet (two ATM packets) is sent upstream to a network element for every multicast which a communication device is set to actively receive.

In an alternative embodiment, a flag is set to trigger a GMQ following a Lost Leave recovery procedure when a requested connection for a communication device is not successful due to a bandwidth limitation, for example. In the example of Fig. 3, the communication link can support only two channels, and therefore the flag is set when or after the Group Join request 38 is received. When the Lost Leave recovery procedure completes after the response time period 42, resulting in the bandwidth for channel 1 being freed, the flag is checked. If the flag is set, then this provides an indication that a communication device is not getting a requested multicast, which triggers the GMQ 44.

In the case where the communication link between the network element 14 and the communication devices 10, 12 can support connections for channels 1, 2, and 3, then the Lost Leave recovery procedure may still be triggered when the Group Join request 38 for channel 3 is received. However, the Group Join request 38 will be fulfilled and therefore the flag is preferably not set. The GMQ 44 is preferably not immediately sent because the communication devices 10, 12 are receiving their requested multicasts.

Methods in accordance with embodiments of the invention have been described in detail above. Fig. 4 is a block diagram of a network element in which a system according to an embodiment of the invention may be implemented. The illustrative example of the network element 14 as shown in Fig. 4 includes a processor 50 connected to a transceiver 54, a switch 56, and a memory 58. In one embodiment, the network element 14 is a DSL Access Multiplexer (DSLAM), although the invention is in no way limited thereto.

The transceiver 54 enables the network element 14 for communication with both communication devices and electronic content providers, which may operate in the same communication network or in different communication networks. If the communication devices and electronic content providers operate in different communication networks, then multiple transceivers may be provided, and any interoperability functions may be handled by the processor 50 and software stored in the memory 58. Any of many different types of transceiver 54 may be implemented in the network element 14.

The switch 56 is a switching element which is controllable by the processor 50 to cross-connect electronic content received from electronic content providers to one or more multicast connections established through the transceiver 54. Although shown as separate components in Fig. 4, the functions of the switch 56 may be integrated into the transceiver 54 or possibly performed by the processor 50.

The memory 58 represents a local memory device, and may include, for example, any of solid state memory devices, disk drives, and other memory devices adapted to operate with fixed or removable memory media. As described in further detail below, the memory 58 may be used to store membership records and flags, in addition to software and possibly other information.

The processor 50 may be a microprocessor which executes software stored in the memory 58, for example. The processor 50 may instead be implemented as a microcontroller, an ASIC, or other processing element. Embodiments of the invention may be implemented using either dedicated components or components which also perform other functions. For example, the processor 58 may execute operating system software and software applications to support functions other than those disclosed herein.

In the network element of Fig. 4, the processor 50 is configurable to perform any of the functions described above. For example, according to one embodiment of the invention, software stored in the memory 58 is executed by the processor 50 and causes the processor 50 to receive through the transceiver 54 a request from a communication device for transmission of electronic content, to determine whether other electronic content precludes transmission of the requested electronic content, to detect termination of transmission of the other electronic content, to transmit an electronic content query to the communication device through the transceiver 54 responsive to the detecting, and to initiate transmission of electronic content specified in a response to the electronic content query received from the communication device. Alternatively, further or different hardware elements may be used instead of or in conjunction with the processor 50 to perform these functions.

The network element 14 as shown in Fig. 4 may also perform other functions as disclosed herein to implement further embodiments of the invention for managing the distribution of electronic content and communication system connections and resources. For example, in embodiments of the invention in which query transmission is dependent upon a flag, the flag may be implemented as a data field in the memory 58.

Fig. 5 is a block diagram of a data structure according to a further embodiment of the invention, which may be stored in a machine-readable medium such as the memory 58 (Fig. 4) in a network element. In one embodiment, a network element maintains a table for each communication link, illustratively a DSL, over which it transmits electronic content.

The data structure of Fig. 5 includes a data field 60 for identifiers of multicast groups, a data field 62 for identifiers of communication devices which belong to each multicast group, and a data field 64 for a flag which is used to determine whether a query is to be transmitted upon termination of a multicast connection associated with each multicast group. A record including the fields 60, 62 may be regarded as one example of a multicast group membership record from which the multicast groups to which communications devices belong may be determined. An association between a flag in the data field 64 and a membership record provides for flag-based control of electronic content query transmission as described above. This association may be established by adding the data field 64 to a membership record or establishing a logical link between a membership record and a separate flag, for instance.

The identifiers in the field 60 may be multicast group or channel identifiers, as shown. In one embodiment, the communication device identifiers in the field 62 are MAC addresses. A flag in the field 64 may be a single bit, for example, which is set high or low depending on whether a query is to be transmitted upon termination of a multicast connection associated with the group and reset after a query has been transmitted.

A network element which manages the distribution of electronic content updates the data structure as requests to initiate and stop transmission of electronic content are received. The entries in the data fields 60, 62, 64 as shown in Fig. 5 reflect membership records as they would appear after the second Group Join request 38 is received by the network element 14 in Fig. 3 and a flag is set for the first record relating to the transmission of channel 1 to communication device 10. Although a record is shown in Fig. 5 for channel 3, which neither of the devices 10, 12 is actively receiving, it should be appreciated a data structure maintained by a network element might instead include records for only those multicast groups for which electronic content is being transmitted, i.e., for channels 1 and 2 in Fig. 5. In this case, a record may be created when transmission of electronic content for a multicast group is first initiated on a communication link and deleted when the electronic content for a multicast group is no longer being actively received by any of the communication devices configured for operation on the communication link. This record management technique may reduce the number of records which are maintained at the network element, in that records are not "reserved" for every multicast source from which the network element may receive electronic content.

The effect of the flag in the field 64 will be apparent from the foregoing description. If a flag is set for a particular record, then termination of a multicast connection or transmission of electronic content associated with the record also triggers transmission of a query, illustratively a GMQ, on a communication link which is affected by the termination.

Embodiments of the present invention are not limited to the particular layout of the data structure shown in Fig. 5. For example, the field 60 might include identifiers of electronic content other than multicast group identifiers. In addition, if a multicast group has more than one member, the field 62 in a single record might include an identifier for each group member and thus each multicast connection, or alternatively separate respective records including the fields 60, 62, 64 may be created for each member to thereby identify each multicast connection associated with a multicast group. Whereas the former record structure may provide for a faster determination of multicast group membership, the latter structure provides for more granular flag-based control of the transmission of queries on the basis of particular multicast connections.

The records might also be indexed by communication device identifier instead of by group or channel identifier. In this case, a single record for a communication device may include identifiers of all multicast groups to which it belongs or a record may be created for each multicast connection established for the communication device.

Although embodiments of the invention have been described above primarily with reference to electronic content transmission and multicast connections over a single communication link, it should be appreciated that a network element may service many communication links. For this type of network element, a data structure which includes a further data field for communication link identifiers or alternatively separate per-communication link records may be preferred.

Efficient communication system connection and resource management techniques in accordance with embodiments of the invention have been described. Responsiveness to control functions, which may be improved by embodiments of the invention, is important to an end user's satisfaction with any service. Therefore, improving the robustness and response time of these controls as disclosed herein may be important to service providers and vendors of equipment that provides services.

What has been described is merely illustrative of the application of the principles of the invention. Other arrangements and methods can be implemented by those skilled in the art without departing from the scope of the present invention.

For example, although described primarily in the context of methods and systems, other implementations of the invention are also contemplated, as instructions stored on a machine-readable medium for example.

## Claims

1. A method of managing electronic content distribution in a communication system, comprising:
receiving from a communication device configured for communication on a communication link in the communication system a request for transmission of electronic content to the communication device on the communication link;
determining whether further electronic content being transmitted on the communication link precludes transmission of the electronic content to the communication device on the communication link;
detecting a termination of transmission of the further electronic content on the communication link where the further electronic content being transmitted on the communication link precludes transmission of the electronic content to the communication device on the communication link;
transmitting an electronic content query to the communication device responsive to the detecting; and
initiating transmission of electronic content specified in a response to the electronic content query received from the communication device.

2. The method of claim 1 or claim 2, wherein the communication link comprises a digital subscriber line (DSL).

3. The method of claim 1 or claim 2, wherein determining comprises determining whether transmission of the electronic content on the communication link would exceed available communication resources on the communication link.

4. The method of claim 3, wherein the communication resources comprise bandwidth of the communication link.

5. The method of claim 1 or claim 2, further comprising:
setting a flag where the further electronic content being transmitted on the communication link precludes transmission of the electronic content to the communication device on the communication link,
wherein the electronic content query is transmitted only if the flag has been set.

6. The method of claim 5, wherein determining comprises determining whether there is sufficient bandwidth available on the communication link for transmission of the electronic content, and wherein the flag is set responsive to determining that there is insufficient bandwidth available on the communication link for transmission of the electronic content.

7. The method of any one of claims 1 to 6, wherein the request, the electronic content query, and the response comprise Internet Group Management Protocol (IGMP) messages.

8. The method of any one of claims 1 to 7, further comprising:
determining whether transmission of the further electronic content on the communication link can be terminated; and
terminating the transmission of the further electronic content on the communication link where transmission of the further electronic content on the communication link can be terminated.

9. The method of claim 8, wherein determining whether transmission of the further electronic content on the communication link can be terminated comprises:
comparing an identifier of the communication device in the request to an identifier in a previous request in response to which transmission of the further electronic content was initiated;
transmitting a specific query for the further electronic content to all communication devices configured for communication on the communication link where the identifiers in the request and the previous request match; and
determining that transmission of the further electronic content on the communication link can be terminated where no responses to the specific query are received.

10. A machine-readable medium storing instructions which when executed perform the method of any one of claims 1 to 9.

11. A system for managing distribution of electronic content in a communication system, comprising:
means for receiving from a communication device configured for communication on a communication link in the communication system a request for transmission of electronic content to the communication device on the communication link;
means for determining whether further electronic content being transmitted on the communication link precludes transmission of the electronic content to the communication device on the communication link;
means for detecting a termination of transmission of the further electronic content on the communication link where the further electronic content being transmitted on the communication link precludes transmission of the electronic content to the communication device on the communication link;
means for transmitting an electronic content query to the communication device responsive to the detecting; and
means for initiating transmission of electronic content specified in a response to the electronic content query received from the communication device.

12. The system of claim 11, wherein the means for receiving and the means for transmitting comprise a transceiver, and wherein at least one of the means for determining, the means for detecting, and the means for initiating comprises a processor connected to the transceiver and configured to perform at least one of the functions of determining, detecting, and initiating.

13. The system of claim 12, further comprising:
a controllable switching element for switching electronic content for transmission on the communication link,
wherein the processor is configured to initiate transmission of electronic content specified in a response to the electronic content query received from the communication device by controlling the controllable switching element.

14. The system of any one of claims 11 to 13, wherein the means for determining determines whether transmission of the electronic content on the communication link would exceed available communication resources on the communication link.

15. The system of any one of claims 11 to 13, wherein the means for determining further sets a flag where the further electronic content being transmitted on the communication link precludes transmission of the electronic content to the communication device on the communication link, and wherein the means for transmitting the electronic content query transmits the electronic content query only if the flag has been set.

16. The system of any one of claims 11 to 13, wherein the means for determining determines whether sufficient bandwidth is available on the communication link for transmission of the electronic content, and wherein the means for initiating is further responsive to the means for determining to initiate transmission of the electronic content to the communication device on the communication link where sufficient bandwidth is available on the communication link for transmission of the electronic content.

17. The system of any one of claims 11 to 16, further comprising:
means for determining whether transmission of the further electronic content on the communication link can be terminated where the further electronic content being transmitted on the communication link precludes transmission of the electronic content to the communication device on the communication link; and
mean for terminating the transmission of the further electronic content on the communication link where transmission of the further electronic content on the communication link can be terminated.

18. The system of any one of claims 11 to 17, wherein the request, the electronic content query, and the response comprise Internet Group Management Protocol (IGMP) messages.

19. The system of any one of claims 11 to 18, implemented in a network element of the communication system.

20. The system of claim 19, wherein the network element comprises a Digital Subscriber Line (DSL) Access Multiplexer (DSLAM).

21. The system of claim 19, wherein the network element provides access to electronic content for a plurality of communication devices.

22. The system of any one of claims 11 to 21, wherein the communication device comprises a set top box.

23. A method of managing connections in a communication system, comprising:
receiving from a communication device a request to establish a connection for transmission of electronic content;
identifying an existing connection for transmission of further electronic content to the communication device;
detecting termination of the existing connection;
transmitting an electronic content query to the communication device responsive to the detecting; and
establishing a connection for transmission of electronic content specified in a response to the electronic content query which is received from the communication device.

24. The method of claim 23, further comprising:
determining whether bandwidth currently available on a communication link on which the communication device is configured to communicate is sufficient for the connection; and
establishing the connection where the bandwidth currently available is sufficient for the connection,
wherein the electronic content query is transmitted to the communication device only where the bandwidth currently available is insufficient for the connection.

25. The method of claim 24, further comprising:
initiating termination of the existing connection where the bandwidth currently available is insufficient for the connection.

26. The method of any one of claims 23 to 25, wherein the communication device is configured for communication on a shared communication link in the communication system, the method further comprising:
transmitting on the shared communication link a specific query for the further electronic content; and
terminating the existing connection in the absence of any responses to the specific query.

27. The method of claim 26, wherein the specific query comprises an Internet Group Management Protocol (IGMP) Group Specific Query (GSQ).

28. The method of any one of claims 23 to 27, wherein the request comprises a Media Access Control (MAC) address of the communication device, and wherein the existing connection comprises a connection associated with the MAC address.

29. The method of claim 24 or claim 25, further comprising:
setting a flag where sufficient bandwidth is not available,
wherein detecting further comprises detecting that the flag has been set.

30. The method of any one of claims 23 to 29, wherein the request comprises an Internet Group Management Protocol (IGMP) Group Join message, and wherein the electronic content query comprises an IGMP Group Membership Query (GMQ).

31. A machine-readable medium storing instructions which when executed perform the method of any one of claims 23 to 30.

32. A connection management system for a communication system, comprising:
means for receiving from a communication device a request to establish a connection for transmission of electronic content;
means for identifying an existing connection for transmission of further electronic content to the communication device;
means for detecting termination of the existing connection;
means for transmitting an electronic content query to the communication device responsive to the detecting; and
means for establishing a connection for transmission of electronic content specified in a response to the electronic content query which is received from the communication device.

33. The system of claim 32, wherein the means for receiving and the means for transmitting comprise a transceiver, and wherein at least one of the means for identifying, the means for detecting, and the means for establishing comprises a processor connected to the transceiver and configured to perform at least one of the functions of identifying, detecting, and establishing.

34. The system of claim 33, further comprising:
a controllable switching element for switching electronic content for transmission on any of a plurality of connections including the connection,
wherein the processor is configured to establish the connection by controlling the controllable switching element.

35. The system of any one of claims 32 to 34, further comprising:
means for determining whether sufficient communication resources are available to establish the connection; and
means for terminating the existing connection where sufficient communication resources are not available.

36. The system of any one of claims 32 to 35, wherein the communication device is configured for communication on a Digital Subscriber Line (DSL).

37. The system of claim 36, wherein the connection and the existing connection are multicast connections associated with respective multicast groups, the system further comprising:
means for transmitting on the DSL an Internet Group Management Protocol (IGMP) Group Specific Query (GSQ) for the multicast group associated with the existing multicast connection; and
means for terminating the existing multicast connection in the absence of any responses to the GSQ.

38. The system of claim 37, wherein the means for transmitting an IGMP GSQ transmits a further GSQ for the multicast group associated with the existing multicast connection, and wherein the means for terminating terminates the existing multicast connection in the absence of any responses to the GSQ and the further GSQ.

39. The system of any one of claims 32 to 38, wherein the request comprises a Media Access Control (MAC) address of the communication device, and wherein the means for identifying identifies as the existing connection a connection associated with the MAC address.

40. The system of claim 35, wherein the means for determining further sets a flag where sufficient communication resources are not available, and wherein the means for transmitting the electronic content query transmits the electronic content query only if the flag has been set.

41. The system of any one of claims 32 to 40, implemented in a Digital Subscriber Line (DSL) Access Multiplexer (DSLAM).

42. The system of any one of claims 32 to 41, wherein the communication device comprises a set top box.

43. The system of any one of claims 32 to 42, wherein the request comprises an Internet Group Management Protocol (IGMP) group join message, and wherein the electronic content query comprises an IGMP Group Membership Query (GMQ).

44. A machine-readable medium storing a data structure comprising:
a record including an identifier of electronic content and an identifier of a communication device to which the electronic content is to be transmitted; and
a flag associated with the record indicating whether a query is to be transmitted to the communication device upon termination of transmission of the electronic content to the communication device.

45. The machine-readable medium of claim 44, wherein the electronic content is multicast group electronic content associated with a multicast group, and wherein the identifier of electronic content comprises an identifier of the multicast group.

46. The machine-readable medium of claim 44,
wherein the electronic content is to be transmitted to a plurality of communication devices including the communication device, and wherein the record includes an identifier of each of the plurality of communication devices.

47. The machine-readable medium of claim 44, wherein the electronic content is to be transmitted to a plurality of communication devices including the communication device, and wherein the data structure comprises a respective record for each of the plurality of communication devices and a respective flag associated with each of the records.

48. The machine-readable medium of any one of claims 44 to 47, wherein the record further comprises the flag.

49. The machine-readable medium of any one of claims 44 to 48, wherein the identifier of the communication device comprises a Media Access Control (MAC) address.

50. The machine-readable medium of any one of claims 44 to 49, wherein the flag is set to a predetermined value indicating that the query is to be transmitted where an identifier of a communication device in a request for transmission of electronic content matches the identifier of a communication device in the record.
